# EUROPEAN PATENT SPECIFICATION

(11) **EP 3 670 243 B1**
(45) Date of publication and mention of the grant of the patent: **28.10.2026**
(21) Application number: 18858497.3
(22) Date of filing: 20.09.2018
(51) Int. Cl.: B60L 50/50, B60K 17/34

(54) **ELECTRIC VEHICLE**
ELEKTROFAHRZEUG
VÉHICULE ÉLECTRIQUE

(30) Priority: 25.09.2017 KR 20170123186
(43) Date of publication of application: 24.06.2020
(73) Proprietor: LG Chem, Ltd., Seoul 07336 (KR)
(72) Inventor: KONG, Chang Sun, Daejeon 34122 (KR); YANG, Jae Choon, Daejeon 34122 (KR)
(74) Representative: Hoffmann Eitle
(86) International application number: PCT/KR2018/011087
(87) International publication number: WO 2019/059656

(56) References cited:
- JP-A- 2004 253 337
- KR-A- 20060 060 003
- KR-A- 20160 082 907
- KR-A- 20170 040 143
- US-A1- 2004 094 928
- US-A1- 2004 263 099
- US-A1- 2004 263 099
- US-A1- 2005 139 402
- US-A1- 2008 314 663
- US-A1- 2009 223 726
- US-A1- 2012 041 621

## Description

### Technical Field

The present invention relates to an electric vehicle, and more particularly, to an electric vehicle on which a fuel cell stack is mounted.

### Background Art

In recent years, demand for environmentally friendly electric vehicles (EVs) has been increasing due to the trend of the strengthening of global environmental regulations and the reduction of energy costs.

In particular, an in-wheel motor system in which a motor is integrated with a wheel of an electric vehicle to directly rotate the tire is attracting attention as a core technology of a next-generation electric vehicle.

In addition, a battery pack and/or a fuel cell stack are mounted to supply power to motors and various electric devices of electric vehicles.

Generally, a fuel cell is an energy conversion device that generates electrical energy through an electrochemical reaction between a fuel and an oxidizer and has an advantage that electric power can be consistently generated as long as the fuel is continuously supplied.

For example, a polymer electrolyte fuel cell includes a membrane-electrode assembly (MEA) equipped with an electrode layer formed by coating an anode and a cathode around an electrolyte membrane composed of a polymer material. In addition, the fuel cell includes a gas diffusion layer (GDL) for distributing reaction gases evenly throughout the reaction region and serving to transfer electrons generated by the oxidation reaction of the anode electrode toward the cathode electrode, and a bipolar plate for supplying the reaction gases to the gas diffusion layer and discharging the water generated by the electrochemical reaction to the outside.

On the other hand, in the case of the in-wheel motor system, there is an advantage in that power loss can be reduced because individual motors for each wheel are driven independently, whereas the battery pack or the fuel cell stack occupies a large space as a single device, which affects the internal structure design of the vehicle, and causes a problem of deteriorating efficiency of space utilization.

JP 2004 253 337 A relates to a power supply device of a fuel cell vehicle. This power supply device has two or more electrical loads (motors, a low voltage appliance) loaded in the fuel cell vehicle, and the fuel cells are disposed in close vicinity to each of the at least two loads to supply power to each load.

US 2004/263099 A1 refers to a propulsion system for an electric car or other vehicle. The electric vehicle comprises one or more electric motors and/or generators. At least one motor and/or generator is an adaptive electric machine comprising two or more electromagnetic circuits that are isolated to eliminate electromagnetic and electrical interference between the circuits.

US 2009/223726 A1 refers to a hybrid fuel cell vehicle with a multi-power source and a multi-drive system, including: a plurality of primary power sources sharing a single main bus terminal and connected in parallel to each other; a plurality of drive systems receiving power from the main bus terminal to generate output torque so as to drive vehicle wheels and connected in parallel to each other; and an auxiliary power source sharing the main bus terminal and disposed between the primary power sources and the drive systems to supplement power shortage of the primary power sources.

US 2012/041621 A1 refers to vehicular propulsion systems and methods for managing propulsion systems. The remaining energy in an energy supply coupled to a propulsion actuator on-board a vehicle is monitored. The energy provided to an on-board auxiliary non-propulsion load device from the energy supply is automatically limited based on the remaining energy in the energy supply.

KR 20170040143 A relates to a fuel cell system for charging batteries for electric automobiles, which charges the batteries by operating if a charged state of the batteries which are a main power source in the electric automobiles falls below a standard value.

US 2008/314663 A1 relates to a system and method of extending regenerative braking in a hybrid electric vehicle. The vehicle includes an internal combustion engine coupled to an input of a first electric energy device, the first electric energy device having an output coupled to a transmission device, and a second electric energy conversion device coupled downstream of the transmission device, the first and second electric energy conversion devices being powered at least by a battery. The method includes during a deceleration condition, generating brake torque via the second electric energy conversion device to generate electric energy storable in the battery; and rotating the internal combustion engine via torque output from the first electric energy device to deplete electric energy from the battery.

### Disclosure

### Technical Problem

It is a problem to be solved by the present invention to provide an electric vehicle capable of individually supplying power to a drive motor built in each wheel in an in-wheel motor system, and individually controlling it.

In addition, it is a problem to be solved by the present invention to provide an electric vehicle equipped with fuel cell stack modules having a parallel or distributed connection structure and capable of individual operation and individual control.

### Technical Solution

To solve the above-described problems, according to the present invention, there is provided an electric vehicle comprising: first to fourth motors mounted to individually rotate right and left wheels in the front and rear of the vehicle, respectively; first to fourth fuel cell stack modules independently connected to the respective motors so as to supply power to the first to fourth motors one-to-one, respectively; a battery pack for supplying power to the first to fourth motors; a main control part for controlling the first to fourth motors, the first to fourth fuel cell stack modules and the battery pack; and a tank for supplying hydrogen gas to the first to fourth fuel cell stack modules. Each motor is supplied with main power from the fuel cell stack modules, and is selectively supplied with power from the battery pack. That is, the main control part can control the power supplied to the respective motors, which can control so that the power supplied from the fuel cell stack modules is supplied as the main power source and the power of the battery pack is supplied as an auxiliary power source. The main control part is provided to supply power to each motor through the battery pack only when a start-up is required or supply of peak power is required. Furthermore, the main control part is provided to perform charging of the battery pack through the fuel cell stack modules when the charged amount of the battery pack falls below a predetermined value.

At this time, in the electric vehicle, an inverter, a motor control part and a fuel cell stack module control part may be independently provided for each wheel.

Also, the main control part may be provided to integrally control each of the motor control parts and the fuel cell stack module control parts. That is, the main control part can control the fuel cell stack modules while controlling each motor control part. Furthermore, the main control part can control each of the motor control parts and the fuel cell stack modules according to various road environments and driving situations.

In addition, each of the motor control parts and the fuel cell stack module control parts may be provided to be synchronized with the main control part.

In addition, the battery pack may comprise a high voltage battery used for driving the motor and a low voltage battery for supplying power to the peripheral devices.

Also, the main control part may be provided to perform charging of the battery pack by regenerative braking of each motor when the charged amount of the battery pack falls below a predetermined value.

In addition, the main control part may be provided to individually adjust the outputs of the first to fourth motors.

At this time, the main control part may be provided to individually adjust the outputs of the first to fourth motors according to driving situations and road environments.

### Advantageous Effects

As described above, the electric vehicle related to one example of the present invention has the following effects.

The present invention can be applied without changing electric vehicle body shapes (designs).

Also, the efficiency of vehicle body space utilization is increased compared to a single fuel cell stack structure.

In addition, since the distance between the power source (fuel cell stack module) and the motor (electric motor) can be minimized, the power loss can be minimized.

Furthermore, through the plurality of fuel cell stack modules, power can be supplied to low-capacity peripheral devices adjacent to the fuel cell stack module.

Also, control and response characteristics are improved due to miniaturization of the fuel cell stack module.

In addition, it has higher energy efficiency than a single large-capacity fuel cell stack module.

### Brief Description of Drawings

Figure 1 is a configuration diagram of an electric vehicle related to one example of the present invention.
Figures 2 and 3 are partial configuration diagrams of an electric vehicle related to one example of the present invention.
Figure 4 is a configuration diagram showing a control system of an electric vehicle related to one example of the present invention.

### Mode for Invention

Hereinafter, an electric vehicle according to one example of the present invention will be described in detail with reference to the accompanying drawings.

In addition, the same or similar reference numerals are given to the same or corresponding components regardless of reference numerals, of which redundant explanations will be omitted, and for convenience of explanation, the size and shape of each constituent member as shown may be exaggerated or reduced.

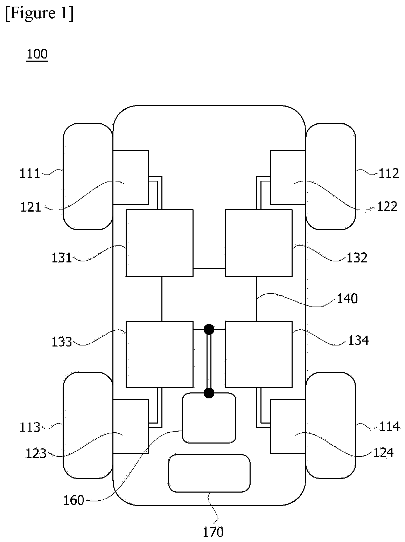

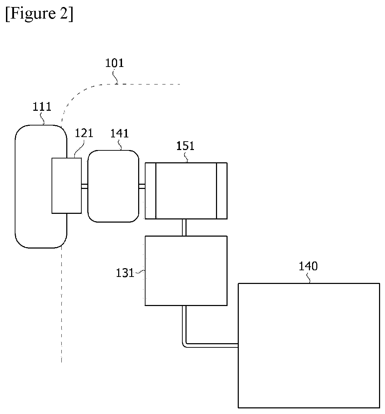

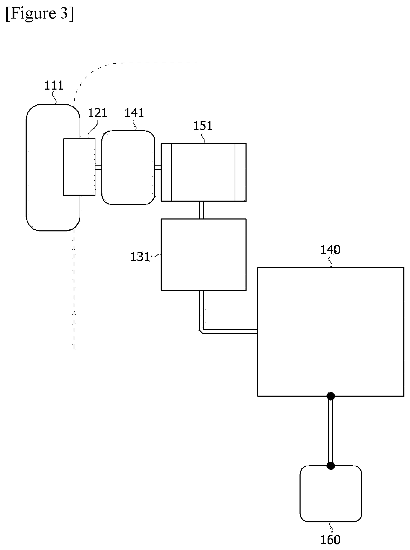

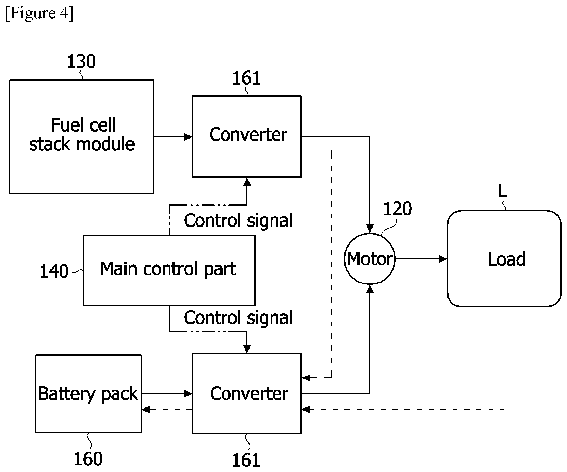

Figure 1 is a configuration diagram of an electric vehicle related to one example of the present invention, Figures 2 and 3 are partial configuration diagrams of an electric vehicle related to one example of the present invention, and Figure 4 is a configuration diagram showing a control system of an electric vehicle related to one example of the present invention.

An electric vehicle (100) related to one example of the present invention comprises a vehicle body (101). Also, the electric vehicle (100) comprises right and left wheels, for example, four wheels (111, 112, 113, 114), in front and rear of the vehicle.

The electric vehicle (100) comprise a plurality of wheels for driving, a plurality of motors integrally mounted on the wheels to independently drive the wheels, and a plurality of fuel cell stack modules individually connected to the motors to supply power to the motors, respectively. For example, if the respective wheels have all built-in motors, the wheels, the motors and the fuel cell stack modules may all have the same number. Alternatively, when the vehicle is front-wheel drive or rear-wheel drive, the number of motors and fuel cell stack modules may be smaller than the number of wheels.

According to the invention, the electric vehicle (100) comprises first to fourth motors (121, 122, 123, 124) mounted to individually rotate the right and left wheels (111, 112, 113, 114) in the front and rear of the vehicle, respectively. Each of the motors (121, 122, 123, 124) is integrated into a corresponding wheel, and drives each wheel separately.

Also, the electric vehicle (100) comprises first to fourth fuel cell stack modules (131, 132, 133, 134) independently connected to the respective motors (121, 122, 123, 124) so as to supply power to the first to fourth motors (121, 122, 123, 124) one-to-one, respectively. Each of the fuel cell stack modules (131, 132, 133, 134) may have the same output and size. Furthermore, the electric vehicle according to the present invention has a structure that the small-sized and small-capacity fuel cell stacks are independently connected to the respective wheel sides to supply power, without using a single fuel cell stack for supplying power to all the wheel sides. In addition, the respective fuel cell stack modules (131, 132, 133, 134) are connected in parallel.

Furthermore, the electric vehicle (100) comprises a main control part (140) for controlling the first to fourth motors (121, 122, 123, 124) and the first to fourth fuel cell stack modules (131, 132, 133, 134).

In addition, the electric vehicle (100) comprises a battery pack (160) for supplying power to the first to fourth motors and a tank (170) for supplying hydrogen gas to the first to fourth fuel cell stack modules (131, 132, 133, 134).

Also, in the electric vehicle (100), an inverter, a motor control part and a fuel cell stack module control part may be independently provided for each of the wheels (111, 112, 113, 114). That is, separately from the main control part (140), the inverter (for example, DC/AC inverter), the motor control part and the fuel cell stack module control part are independently provided on each of the first to fourth wheel sides.

For example, referring to Figures 2 and 3, a first inverter electrically connected to the first motor (121), a first motor control part (141) for individually controlling the first motor (121), and a first fuel cell stack module control part (not shown) for individually controlling the first fuel cell stack module (131) may be provided on the first motor (121) side.

At this time, the main control part (140) may be provided to integrally control each of the motor control parts (for example, 141) and the fuel cell stack module control parts. Specifically, each of the motor control parts and the fuel cell stack module control parts may be provided to be synchronized with the main control part (140).

As independent control parts are provided for each fuel cell stack module, the control of the operation temperature, the gas flow rate, and the like for each fuel cell stack module is facilitated, and miniaturization of the peripheral devices constituting the fuel cell becomes possible.

On the other hand, the inverter (141) performs a function that the DC power transmitted from the fuel cell stack module (131) or the battery pack (160) is adjusted by a signal from the motor controller and transmitted to the motor.

Each of the motors (120: 121, 122, 123, 124) is provided so that it is supplied with main power from the fuel cell stack modules (130: 131, 132, 133, 134), and selectively supplied with power from the battery pack (160).

That is, the electric vehicle (100) related to the present invention can be driven by a hybrid electric power supply system of the fuel electric stack modules (130: 131, 132, 133, 134) and the battery pack (160). The battery pack (160) is provided to supply power to each motor when a fast load response is required or when supply of peak power is required.

Specifically, the fuel cell stack modules (130) are used as a main power source for supplying power to each wheel and the battery pack (160) is used only when a fast load response characteristic such as peak power or start-up is required, so that the efficiency of the overall power supply can be increased.

Referring to Figure 4, the main control part (140) can determine the degree of hybrid use of the fuel cell stack modules (130) and the battery pack (160) and control the signal transmitted to the converter (161), and the main control part (140) can determine the torque for controlling the motor and transmit the control signal.

In addition, the battery pack (160) may comprise a high voltage battery used for driving the motor and a low voltage battery for supplying power to the peripheral devices.

Also, when the charged amount of the battery pack (160) falls below a predetermined value, the battery pack (160) is charged by the fuel cell stack modules (130).

Furthermore, when the charged amount of the battery pack (160) falls below a predetermined value, the battery pack (160) can be charged by the regenerative braking of each motor (120) according to the dynamic load (L).

### Industrial Applicability

According to the electric vehicle related to one example of the present invention, the efficiency of vehicle body space utilization is increased compared to a single fuel cell stack structure, and through the plurality of fuel cell stack modules, power can be supplied to low-capacity peripheral devices adjacent to the fuel cell stack module.

## Claims

1. An electric vehicle (100) comprising:
first to fourth motors (121, 122, 123, 124) mounted to individually rotate right and left wheels (111, 112, 113, 114) in the front and rear of the vehicle (100), respectively;
first to fourth fuel cell stack modules (131, 132, 133, 134) independently connected to the respective motors so as to supply power to the first to fourth motors (121, 122, 123, 124) one-to-one, respectively;
a battery pack (160) for supplying power to the first to fourth motors (121, 122, 123, 124);
a main control part (140) for controlling the first to fourth motors (121, 122, 123, 124), the first to fourth fuel cell stack modules (131, 132, 133, 134) and the battery pack (160); and
a tank (170) for supplying hydrogen gas to the first to fourth fuel cell stack modules (131, 132, 133, 134),
wherein each motor is supplied with main power from the fuel cell stack modules (131, 132, 133, 134) and is selectively supplied with power from the battery pack (160), **characterized in that**
the main control part (140) is provided to supply power to each motor through the battery pack (160) only when a start-up or supply of peak power is required, and
wherein the main control part (140) is provided to perform charging of the battery pack (160) through the fuel cell stack modules (131, 132, 133, 134) when the charged amount of the battery pack (160) falls below a predetermined value.

2. The electric vehicle (100) according to claim 1,
wherein an inverter, a motor control part and a fuel cell stack module control part are independently provided for each wheel, and
the main control part (140) is provided to integrally control each of the motor control parts and the fuel cell stack module control parts.

3. The electric vehicle (100) according to claim 2,
wherein each of the motor control parts and the fuel cell stack module control parts is provided to be synchronized with the main control part (140).

4. The electric vehicle (100) according to claim 1,
wherein the battery pack (160) comprises a high voltage battery used for driving the motor and a low voltage battery for supplying power to peripheral devices.

5. The electric vehicle (100) according to claim 1,
wherein the main control part (140) is provided to perform charging of the battery pack (160) by regenerative braking of each motor when the charged amount of the battery pack (160) falls below a predetermined value.

6. The electric vehicle (100) according to claim 1,
wherein the main control part (140) is provided to individually adjust the outputs of the first to fourth motors (121, 122, 123, 124).

7. The electric vehicle (100) according to claim 6,
wherein the main control part (140) is provided to individually adjust the outputs of the first to fourth motors (121, 122, 123, 124) according to driving situations and road environments.

## Patentansprüche

1. Elektrofahrzeug (100), umfassend:
erste bis vierte Motoren (121, 122, 123, 124), die so angebracht sind, dass sie rechte und linke Räder (111, 112, 113, 114) jeweils vorne und hinten an dem Fahrzeug (100) individuell drehen;
erste bis vierte Brennstoffzellenstapelmodule (131, 132, 133, 134), die mit den jeweiligen Motoren unabhängig verbunden sind, um die ersten bis vierten Motoren (121, 122, 123, 124) jeweils eins zu eins mit Leistung zu versorgen;
ein Batteriepack (160) zum Versorgen der ersten bis vierten Motoren (121, 122, 123, 124) mit Leistung;
ein Hauptsteuerteil (140) zum Steuern der ersten bis vierten Motoren (121, 122, 123, 124), der ersten bis vierten Brennstoffzellenstapelmodule (131, 132, 133, 134) und des Batteriepacks (160); und
einen Tank (170) zum Zuführen von Wasserstoffgas zu den ersten bis vierten Brennstoffzellenstapelmodulen (131, 132, 133, 134),
wobei jeder Motor mit Hauptleistung aus den Brennstoffzellenstapelmodulen (131, 132, 133, 134) versorgt wird und selektiv mit Leistung aus dem Batteriepack (160) versorgt wird, **dadurch gekennzeichnet, dass**
das Hauptsteuerteil (140) dazu bereitgestellt ist, jeden Motor durch das Batteriepack (160) nur dann mit Leistung zu versorgen, wenn ein Anfahren oder die Bereitstellung von Spitzenleistung erforderlich ist, und
wobei das Hauptsteuerteil (140) dazu bereitgestellt ist, ein Laden des Batteriepacks (160) durch die Brennstoffzellenstapelmodule (131, 132, 133, 134) durchzuführen, wenn der Ladezustand des Batteriepacks (160) unter einen vorbestimmten Wert fällt.

2. Elektrofahrzeug (100) nach Anspruch 1,
wobei ein Inverter, ein Motorsteuerteil und ein Brennstoffzellenstapelmodul-Steuerteil für jedes Rad jeweils unabhängig vorgesehen sind, und
das Hauptsteuerteil (140) dazu bereitgestellt ist, jedes der Motorsteuerteile und der Brennstoffzellenstapelmodul-Steuerteile zentral zu steuern.

3. Elektrofahrzeug (100) nach Anspruch 2,
wobei jedes der Motorsteuerteile und der Brennstoffzellenstapelmodul-Steuerteile dazu bereitgestellt ist, mit dem Hauptsteuerteil (140) synchronisiert zu werden.

4. Elektrofahrzeug (100) nach Anspruch 1,
wobei das Batteriepack (160) eine Hochvoltbatterie, die zum Antreiben des Motors verwendet wird, und eine Niedervoltbatterie zum Versorgen von Peripheriegeräten mit Leistung umfasst.

5. Elektrofahrzeug (100) nach Anspruch 1,
wobei das Hauptsteuerteil (140) dazu bereitgestellt ist, ein Laden des Batteriepacks (160) durch regeneratives Bremsen jedes Motors durchzuführen, wenn der Ladezustand des Batteriepacks (160) unter einen vorbestimmten Wert fällt.

6. Elektrofahrzeug (100) nach Anspruch 1,
wobei das Hauptsteuerteil (140) dazu bereitgestellt ist, die Ausgangsleistungen der ersten bis vierten Motoren (121, 122, 123, 124) individuell einzustellen.

7. Elektrofahrzeug (100) nach Anspruch 6,
wobei das Hauptsteuerteil (140) dazu bereitgestellt ist, die Ausgangsleistungen der ersten bis vierten Motoren (121, 122, 123, 124) nach Fahrsituationen und Straßenumgebungen individuell anzupassen.

## Revendications

1. Véhicule électrique (100) comprenant :
des premier à quatrième moteurs (121, 122, 123, 124) montés pour faire tourner individuellement des roues droite et gauche (111, 112, 113, 114) à l'avant et à l'arrière du véhicule (100), respectivement ;
des premier à quatrième modules d'empilement de piles à combustible (131, 132, 133, 134) reliés indépendamment aux moteurs respectifs de manière à apporter individuellement de l'énergie aux premier à quatrième moteurs (121, 122, 123, 124), respectivement ;
un bloc-batterie (160) destiné à apporter de l'énergie aux premier à quatrième moteurs (121, 122, 123, 124) ;
une partie de commande principale (140) destinée à commander les premier à quatrième moteurs (121, 122, 123, 124), les premier à quatrième modules d'empilement de piles à combustible (131, 132, 133, 134) et le bloc-batterie (160) ; et
un réservoir (170) destiné à apporter de l'hydrogène gazeux aux premier à quatrième modules d'empilement de piles à combustible (131, 132, 133, 134),
dans lequel chaque moteur est alimenté en énergie principale à partir des modules d'empilement de piles à combustible (131, 132, 133, 134) et est alimenté sélectivement en énergie à partir du bloc-batterie (160), **caractérisé en ce que**
la partie de commande principale (140) est prévue pour apporter de l'énergie à chaque moteur par l'intermédiaire du bloc-batterie (160) seulement lorsqu'un démarrage ou un apport d'énergie de crête est requis, et
dans lequel la partie de commande principale (140) est prévue pour effectuer la charge du bloc-batterie (160) par le biais des modules d'empilement de piles à combustible (131, 132, 133, 134) lorsque le niveau de charge du bloc-batterie (160) tombe sous une valeur prédéterminée.

2. Véhicule électrique (100) selon la revendication 1,
dans lequel un onduleur, une partie de commande de moteur et une partie de commande de module d'empilement de piles à combustible sont prévus indépendamment pour chaque roue, et
la partie de commande principale (140) est prévue pour commander de manière intégrée chacune des parties de commande de moteur et des parties de commande de module d'empilement de piles à combustible.

3. Véhicule électrique (100) selon la revendication 2,
dans lequel chacune des parties de commande de moteur et des parties de commande de module d'empilement de piles à combustible est prévue pour être synchronisée avec la partie de commande principale (140).

4. Véhicule électrique (100) selon la revendication 1,
dans lequel le bloc-batterie (160) comprend une batterie haute tension utilisée pour entraîner le moteur et une batterie basse tension destinée à apporter de l'énergie à des dispositifs périphériques.

5. Véhicule électrique (100) selon la revendication 1,
dans lequel la partie de commande principale (140) est prévue pour effectuer la charge du bloc-batterie (160) par freinage régénératif de chaque moteur lorsque le niveau de charge du bloc-batterie (160) tombe sous une valeur prédéterminée.

6. Véhicule électrique (100) selon la revendication 1,
dans lequel la partie de commande principale (140) est prévue pour ajuster individuellement les sorties des premier à quatrième moteurs (121, 122, 123, 124).

7. Véhicule électrique (100) selon la revendication 6,
dans lequel la partie de commande principale (140) est prévue pour ajuster individuellement les sorties des premier à quatrième moteurs (121, 122, 123, 124) en fonction de situations de conduite et d'environnements routiers.
